(19) Europäisches Patentamt
European Patent Office
Office européen des brevets

(11) **EP 4 316 647 A1**

(12) **EUROPEAN PATENT APPLICATION**
published in accordance with Art. 153(4) EPC

(43) Date of publication:
**07.02.2024 Bulletin 2024/06**

(21) Application number: **22775630.1**

(22) Date of filing: **22.03.2022**

(51) International Patent Classification (IPC):
*B01J 20/26* (2006.01)   *B01D 53/14* (2006.01)
*B01J 20/28* (2006.01)   *B01J 20/30* (2006.01)
*C01B 33/18* (2006.01)

(52) Cooperative Patent Classification (CPC):
**B01D 53/14; B01J 20/26; B01J 20/28; B01J 20/30;
C01B 33/18**

(86) International application number:
**PCT/JP2022/013294**

(87) International publication number:
**WO 2022/202848 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.03.2021 JP 2021053906**

(71) Applicant: **NITTO DENKO CORPORATION**
**Ibaraki-shi**
**Osaka 567-8680 (JP)**

(72) Inventors:
• **TANAKA, Shota**
**Ibaraki-shi, Osaka 567-8680 (JP)**
• **MATSUDA, Koso**
**Ibaraki-shi, Osaka 567-8680 (JP)**
• **GOTO, Chisato**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **ACIDIC GAS ADSORBENT, METHOD FOR PRODUCING ACIDIC GAS ADSORBENT, AND ACIDIC GAS ADSORPTION DEVICE**

(57)     The present invention provides an acidic gas adsorbent having improved heat resistance. The acidic gas adsorbent of the present invention includes a porous body, and an amine compound being a solid and being supported on surfaces of pores of the porous body. The acidic gas adsorbent includes, for example, a cover layer covering the surfaces of the pores of the porous body, and the cover layer includes the amine compound. As an example, when each pore of the porous body is assumed to have a spherical shape, the cover layer has a thickness of 5.0 nm or less, the thickness being calculated from the average pore diameter of the porous body, the pore volume of the porous body, and the pore volume of the acidic gas adsorbent.

FIG.1

**Description**

TECHNICAL FIELD

The present invention relates to an acidic gas adsorbent, a method for producing the acidic gas adsorbent, and an acidic gas adsorption device.

BACKGROUND ART

In recent years, in order to reduce the amount of carbon dioxide in atmospheric air, carbon capture and storage (CCS) and carbon capture and utilization (CCU) have been considered. In CCS and CCU, in some cases, capture of carbon dioxide is performed by separating carbon dioxide from atmospheric air.

As a method for separating acidic gas such as carbon dioxide from atmospheric air, an adsorption method in which acidic gas is caused to be adsorbed by an adsorbent to be separated has been developed. The adsorbent utilized in the adsorption method can adsorb acidic gas by coming into contact with atmospheric air, for example.

As the adsorbent, an adsorbent in which pores of a porous body are filled with an amine compound is utilized in some cases (e.g., Patent Literature 1 and Non Patent Literature 1).

CITATION LIST

Patent Literature

Patent Literature 1: JP2015-9185A

Non Patent Literature

Non Patent Literature 1: Hang Zhang et al, "CO2 capture on easily regenerable hybrid adsorbents based on polyamines and mesocellular silica foam. Effect of pore volume of the support and polyamine molecular weight", RSC Adv., 2014, Vol. 4, p. 19403-19417.

SUMMARY OF INVENTION

Technical Problem

Conventionally, as the amine compound, a liquid compound has been used since: entry into pores of a porous body is easy; there is a tendency that the diffusion speed of acidic gas to the inside is large and the acidic gas adsorption speed is large; and the like. Examples of a liquid amine compound include polyethyleneimine, and the like. However, from the viewpoint of heat resistance, there is room for improvement of the conventional acidic gas adsorbent.

The present invention provides an acidic gas adsorbent having improved heat resistance.

Solution to Problem

The present invention provides an acidic gas adsorbent including:

a porous body; and
an amine compound being a solid and being supported on surfaces of pores of the porous body.

Further, the present invention provides a method for producing an acidic gas adsorbent, the method including:

mixing a porous body and a compound group including at least one selected from the group consisting of an amine monomer and an amine prepolymer, to bring the compound group into contact with surfaces of pores of the porous body; and
forming, by causing the compound group to react, an amine compound being a solid and being supported on the surfaces of the pores of the porous body.

Further, the present invention provides an acidic gas adsorption device including an adsorption part having a gas inlet and a gas outlet, wherein the adsorption part contains the above acidic gas adsorbent.

Advantageous Effects of Invention

According to the present invention, an acidic gas adsorbent having improved heat resistance can be provided.

BRIEF DESCRIPTION OF THE DRAWINGS

FIG. 1 is a diagram for describing a method for identifying the thickness of a cover layer of an acidic gas adsorbent according to an embodiment of the present invention.
FIG. 2 is a diagram for describing a method for measuring an adsorption amount of carbon dioxide by the acidic gas adsorbent.

DESCRIPTION OF EMBODIMENTS

Hereinafter, details of the present invention will be described, but the following description is not intended to limit the present invention to specific embodiments.

An acidic gas adsorbent of the present embodiment includes a porous body and an amine compound P being a solid. The porous body has a pore volume of 2.0 $cm^3/g$ or more, for example. Details of the pore volume of the porous body will be described later. The amine compound P is supported on surfaces of pores of the porous body, and has a function of adsorbing acidic gas. The surfaces of the pores of the porous body means the surfaces respectively facing the pores inside the porous body. In the present description, to be distinguished from the surfaces of the pores, the surface that defines the external form of the porous body may be referred to as the external surface of the porous body.

The acidic gas adsorbent includes a cover layer covering the surfaces of the pores of the porous body, for example, and this cover layer includes the amine compound P. The cover layer may entirely cover the surfaces of the pores, or may partially cover the surfaces of the pores. The cover layer may cover not only the surfaces of the pores but also the external surface of the porous body. The cover layer may include the amine compound P as a main component, or may be substantially composed of only the amine compound P. In the present description, "substantially composed of ---" means excluding other components that change the essential characteristic of the mentioned material, and means that, for example, 95 wt% or more, further, 99 wt% or more, of the mentioned material is composed of the component.

As an example, when each pore of the porous body is assumed to have a spherical shape, a thickness T of the cover layer calculated from an average pore diameter D of the porous body, a pore volume V1 of the porous body, and a pore volume V2 of the acidic gas adsorbent is, for example, 10 nm or less, preferably 8.0 nm or less, more preferably 7.0 nm or less, further preferably 6.0 nm or less, particularly preferably 5.0 nm or less, and especially preferably 4.5 nm or less. The smaller the thickness T of the cover layer, the more the adsorption speed of acidic gas by the acidic gas adsorbent tends to be improved. The lower limit value of the thickness T of the cover layer is not limited in particular, and is 1.0 nm, for example.

The present invention provides, in another aspect thereof, an acidic gas adsorbent including:

a porous body having a pore volume of 2.0 $cm^3/g$ or more; and
a cover layer covering surfaces of pores of the porous body, wherein
the cover layer includes an amine compound, and
when each pore of the porous body is assumed to have a spherical shape, the cover layer has a thickness of 5.0 nm or less, the thickness being calculated from the average pore diameter of the porous body, the pore volume of the porous body, and the pore volume of the acidic gas adsorbent.

In this acidic gas adsorbent, the pore volume of the porous body is relatively large. Thus, even when the thickness of the cover layer is 5.0 nm or less, the surfaces of the pores of the porous body can support a sufficient amount of the amine compound. Therefore, this acidic gas adsorbent is suitable for improving the adsorption speed of acidic gas without largely reducing the adsorption amount of acidic gas.

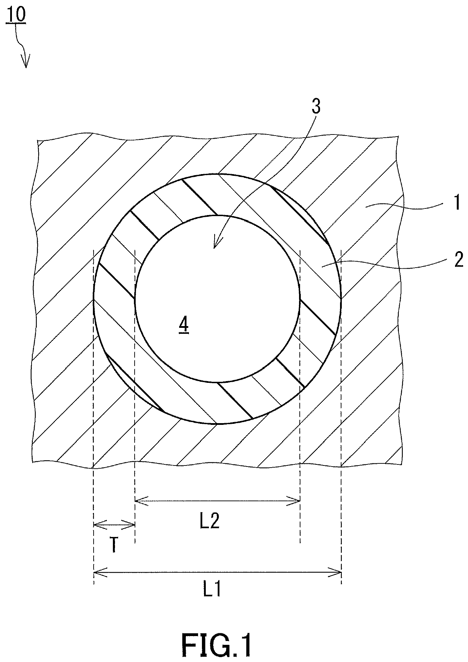

The thickness T of the cover layer can be identified by the following method. First, as shown in FIG. 1, it is assumed that, in an acidic gas adsorbent 10, pores 3 of a porous body 1 each have a spherical shape. FIG. 1 is an image figure of a cross section of the acidic gas adsorbent 10, showing a pore 3 having a spherical shape. As shown in FIG. 1, in a method for identifying the thickness T, it is assumed that, in the acidic gas adsorbent 10, a cover layer 2 entirely covers the surface of each pore 3 of the porous body 1. Inside the pore 3 of the porous body 1, a void 4 having a spherical shape and surrounded by the cover layer 2 is formed.

Next, the average pore diameter D (nm) of the porous body 1 is measured, and the obtained value is regarded as a diameter L1 (nm) of the pore 3 of the porous body 1. The average pore diameter D of the porous body 1 can be measured by a method described later. A volume v1 ($nm^3$) of the pore 3 having a spherical shape can be calculated on the basis of the diameter L1 of the pore 3.

Next, the pore volume V1 ($cm^3/g$) of the porous body 1 and the pore volume V2 ($cm^3/g$) of the acidic gas adsorbent 10 are measured. The pore volumes V1 and V2 can be measured by a method described later. The value obtained by subtracting the pore volume V2 from the pore volume V1 is regarded as the filling amount ($cm^3/g$) of the cover layer 2 in the acidic gas adsorbent 10. Next, the ratio of the filling amount of the cover layer 2 relative to the pore volume V1 is calculated, and the obtained value is regarded as the filling rate (%) of the cover layer 2 in the acidic gas adsorbent 10. The value obtained by subtracting the filling rate of the cover layer 2 from 100 is regarded as a void rate p (%) of the acidic gas adsorbent 10.

Next, on the basis of the void rate p of the acidic gas adsorbent 10 and the volume v1 of the pore 3, a volume v2 ($nm^3$) of the void 4 is calculated from formula (1) below.

$$\text{Volume v2 } (nm^3) = \text{void rate p } (\%) \times \text{volume v1 } (nm^3)/100 \quad (1)$$

Next, from the volume v2 of the void 4, a diameter L2 (nm) of the void 4 is calculated. On the basis of the diameter L1 of the pore 3 and the diameter L2 of the void 4, the thickness T (nm) of the cover layer 2 can be calculated from formula (2) below. Thickness T (nm) = (diameter L1 (nm)-diameter L2 (nm))/2 (2)

(Porous body)

The material of the porous body is not limited in particular. The porous body may include an inorganic material, may include an organic material, or may include both of an organic material and an inorganic material. Examples of the inorganic material included in the porous body include: metal oxides such as silica, alumina, silica alumina, magnesia, and zirconia; metals; minerals such as a clay mineral and a natural mineral; zeolites; and carbon materials such as activated carbon. The porous body preferably includes silica, and particularly preferably is porous silica. Examples of the organic material included in the porous body include (meth)acrylate-based polymers such as polymethyl methacrylate. In the present description, "(meth)acrylate" means acrylate and/or methacrylate.

In the present embodiment, the porous body has a shape of being particulate, for example. Specific forms of the particulate porous body are a spherical shape, an ellipsoid shape, a flake shape, a fiber shape, or the like. In the porous body, the shape of the pore is not limited in particular. The porous body may have a continuous hole continuously formed in a three-dimensional manner, or may have independent holes. The porous body may have a through hole penetrating the porous body.

The average particle diameter of the particulate porous body is not limited in particular, and is, for example, 1 $\mu$m or more, preferably 10 $\mu$m or more, and more preferably 20 $\mu$m or more, or may be 30 $\mu$m or more. The average particle diameter of the porous body may be 200 $\mu$m or less, may be 100 $\mu$m or less, or may be less than 75 $\mu$m. In the present description, the average particle diameter of the porous body means a particle diameter (d50) corresponding to 50% of volume accumulation in a particle size distribution measured by a laser diffraction-type particle size meter or the like.

As described above, the pore volume V1 of the porous body is 2.0 $cm^3/g$ or more, for example. The porous body having the pore volume V1 that is large to this extent can support a sufficient amount of the amine compound on the surfaces of the pores of the porous body. The upper limit value of the pore volume V1 of the porous body is not limited in particular, and is, for example, 5.0 $cm^3/g$, may be 4.0 $cm^3/g$, or may be 3.0 $cm^3/g$. However, depending on the case, the pore volume V1 of the porous body may be less than 2.0 $cm^3/g$, or may be 1.0 $cm^3/g$ or more and less than 2.0 $cm^3/g$. The pore volume V1 of the porous body can be identified by the following method. First, with respect to the porous body, a gas adsorption method using nitrogen gas is performed. Data of an adsorption isotherm obtained by the gas adsorption method is converted by the BJH (Barrett-Joyner-Halenda) method. The pore volume V1 of the porous body can be identified on the basis of the obtained pore diameter distribution.

The average pore diameter D of the porous body is not limited in particular, and is, for example, 5 nm or more, preferably 10 nm or more, and more preferably 20 nm or more, or may be 30 nm or more. The upper limit value of the average pore diameter D of the porous body is not limited in particular, and is 50 nm, for example. Preferably, the average pore diameter D of the porous body is 5 to 50 nm. The average pore diameter D of the porous body means the average value of diameters of a plurality of pores calculated from the pore diameter distribution. The pore diameter distribution can be obtained by the method described above with respect to the pore volume V1 of the porous body.

The specific surface area of the porous body is not limited in particular, and is, for example, 50 $m^2/g$ or more, preferably 100 $m^2/g$ or more, more preferably 200 $m^2/g$ or more, and further preferably 250 $m^2/g$ or more. Depending on the case, the specific surface area of the porous body may be 300 $m^2/g$ or more, 400 $m^2/g$ or more, 500 $m^2/g$ or

more, 600 m²/g or more, or further, 700 m²/g or more. The upper limit value of the specific surface area of the porous body is not limited in particular, and is, for example, 800 m²/g, or may be 500 m²/g depending on the case. Preferably, the specific surface area of the porous body is 50 to 800 m²/g. The specific surface area of the porous body means the BET (Brunauer-Emmett-Teller) specific surface area in terms of nitrogen gas adsorption.

Measurement of the pore volume V1, the average pore diameter D, and the specific surface area of the porous body is performed on the porous body before the amine compound P is supported on the surfaces of the pores, for example. However, this measurement may be performed on the porous body obtained by removing the amine compound P from the acidic gas adsorbent. The removal of the amine compound P can be performed by subjecting the acidic gas adsorbent to heat treatment at a temperature of 800°C or more, for example.

(Amine compound)

As described above, in the present embodiment, the amine compound P is a solid. Specifically, the amine compound P is a solid at 25°C, preferably, in a range of 25°C to 80°C. However, the amine compound P may be a liquid depending on the case. The amine compound P is typically a polymer.

The amine compound P is a compound having an amino group. The amine compound P has a function of adsorbing acidic gas due to the amino group. The amine compound P includes, as the amino group, at least one selected from the group consisting of a primary amino group, a secondary amino group, and a tertiary amino group, for example. From the viewpoint of the acidic gas adsorption ability, the amine compound P preferably includes at least one selected from the group consisting of a primary amino group and a secondary amino group, and particularly preferably includes a secondary amino group. In other words, the amino group of the amine compound P preferably includes a secondary amino group. The amine compound P having a secondary amino group also has a tendency of easily desorbing the adsorbed acidic gas. That is, in the case of the amine compound P having a secondary amino group, a regeneration process of the acidic gas adsorbent can be performed under a relatively mild condition. The amine compound P may include a tertiary amino group, but need not necessarily include a tertiary amino group.

The content of the amino group in the amine compound P, in particular, the primary amino group or the secondary amino group, is, for example, 10 wt% or more and preferably 30 wt% or more. The higher this content is, the more the acidic gas adsorption ability in the acidic gas adsorbent tends to be improved. The upper limit value of the content of the amino group in the amine compound P is not limited in particular, and is 80 wt%, for example.

The amine compound P may include another functional group other than the amino group. Examples of the other functional group include a hydroxyl group, an ether group, an ester group, an amide group, and the like, and a hydroxyl group is preferable. Preferably, the amine compound P is composed of only the hydrocarbon group, the amino group, and the hydroxyl group.

Examples of the amine compound P include an amine polymer including a constitutional unit derived from an epoxy monomer. This amine polymer includes at least one selected from the group consisting of: a reaction product P1 of a compound group including an amine monomer and an epoxy monomer; and a reaction product P2 of a compound group including an amine prepolymer and an epoxy monomer, for example. Another example of the amine compound P is a reaction product P3 of a compound group including an amine monomer and an epoxy prepolymer. From the viewpoint of thermal stability or the like, the amine compound P preferably includes the reaction product P1. The present invention provides, in another aspect thereof, an acidic gas adsorbent including a porous body and the amine compound P being a solid and being supported on surfaces of pores of the porous body, wherein, the amine compound P includes the reaction product P1 of a compound group including an amine monomer and an epoxy monomer.

As described above, the compound group for forming the reaction product P1 includes an amine monomer and an epoxy monomer. The reaction product P1 is, for example, a polymer of monomers including an amine monomer and an epoxy monomer, and preferably is a polymer of an amine monomer and an epoxy monomer in particular.

The amine monomer is a monomer including at least one amino group, and, for example, includes at least one primary amino group. The number of the primary amino groups included in the amine monomer is preferably two or more, may be three or more, or may be four or more. The upper limit value of the number of the primary amino groups is not limited in particular, and is ten, for example. The amine monomer may include a secondary amino group and a tertiary amino group, in addition to the primary amino group. The molecular weight of the amine monomer is not limited in particular, and is, for example, less than 1000 and preferably 500 or less.

Examples of the amine monomer include: aliphatic amines such as ethylamine, ethylenediamine, 1,4-butylenediamine, 1,5-pentanediamine, 1,6-hexanediamine, 1,7-heptanediamine, 1,8-octanediamine, diethylenetriamine, triethylenetetramine, tetraethylenepentamine, imino-bis-propylamine, bis(hexamethylene)triamine, 1,3,6-trisaminomethylhexane, tris(2-aminoethyl)amine, N,N'-bis(3-aminopropyl)ethylenediamine, polymethylenediamine, trimethylhexamethylenediamine, and polyetherdiamine; alicyclic amines such as isophoronediamine, menthanediamine, piperazine, N-aminoethylpiperazine, 3,9-bis(3-aminopropyl)-2,4,8,10-tetraoxaspiro(5,5)undecane adduct, bis(4-amino-3-methylcyclohexyl)methane, and bis(4-aminocyclohexyl)methane, and modified products of these; and the like. The amine monomer preferably includes an aliphatic amine, in particular, triethylenetetramine (TETA). The amine monomer can be used alone, or two types or more thereof may be used in combination.

The epoxy monomer includes at least one epoxy group, for example. The number of the epoxy groups included in the epoxy monomer is preferably two or more, may be three or more, or may be four or more. The upper limit value of the number of the epoxy groups included in the epoxy monomer is not limited in particular, and is ten, for example. The molecular weight of the epoxy monomer is not limited in particular, and is, for example, less than 1000 and preferably 500 or less.

Examples of the epoxy monomer include: monofunctional epoxy compounds such as n-butyl glycidyl ether, higher alcohol glycidyl ether, allyl glycidyl ether, 2-ethylhexyl glycidyl ether, phenyl glycidyl ether, cresyl glycidyl ether, p-sec-butylphenyl glycidyl ether, and t-butylphenyl glycidyl ether; diepoxy alkanes such as 1,5-hexadiene diepoxide, 1,7-octadiene diepoxide, and 1,9-decadiene diepoxide; ether group-containing polyfunctional epoxy compounds such as (poly)ethylene glycol diglycidyl ether, (poly)propylene glycol diglycidyl ether, 1,4-butanediol diglycidyl ether, neopentyl glycol diglycidyl ether, 1,6-hexanediol diglycidyl ether, trimethylolpropane polyglycidyl ether, pentaerythritol tetraglycidyl ether, glycerol polyglycidyl ether, and sorbitol polyglycidyl ether; and amino group-containing polyfunctional epoxy compounds such as N,N,N',N'-tetraglycidyl-m-xylenediamine and 1,3-bis(N,N-diglycidylaminomethyl)cyclohexane. The epoxy monomer can be used alone, or two types or more thereof may be used in combination.

The epoxy monomer preferably includes at least one selected from the group consisting of a diepoxy alkane and an amino group-containing polyfunctional epoxy compound, and more preferably includes a diepoxy alkane. As an example, as the epoxy monomer, 1,7-octadiene diepoxide (ODE) and 1,3-bis(N,N-diglycidylaminomethyl)cyclohexane may be used in combination. When a monofunctional epoxy compound is used, the monofunctional epoxy compound is preferably used in combination with another epoxy monomer including two or more epoxy groups. The monofunctional epoxy compound can also be utilized as a reactive diluent for adjusting the viscosity of the compound group, etc., for preparing the acidic gas adsorbent.

The reaction product P1 includes a constitutional unit U1 derived from the amine monomer, and a constitutional unit U2 derived from the epoxy monomer, for example. The content of the constitutional unit U1 in the reaction product P1 is, for example, 30 wt% or more and preferably 50 wt% or more. The upper limit value of the content of the constitutional unit U1 in the reaction product P1 is not limited in particular, and is 80 wt%, for example. The content of the constitutional unit U2 in the reaction product P1 is 20 wt% to 70 wt%, for example.

The compound group for forming the reaction product P2 includes an amine prepolymer and an epoxy monomer, as described above. The reaction product P2 is a matter (crosslinked product) obtained by the amine prepolymer being crosslinked by the epoxy monomer, for example.

The amine prepolymer for forming the reaction product P2 includes at least one amino group, in particular, a primary amino group, for example. The number of the primary amino groups included in the amine prepolymer is preferably two or more, may be three or more, or may be four or more. The upper limit value of the number of the primary amino groups is not limited in particular, and is 100, for example. The amine prepolymer may include a secondary amino group and a tertiary amino group, in addition to the primary amino group. The weight average molecular weight of the amine prepolymer is not limited in particular, and is, for example, 200 or more, or may be 300 or more, 500 or more, 1000 or more, or further, 1500 or more. The upper limit value of the weight average molecular weight of the amine prepolymer is not limited in particular, and is 5000, for example.

Examples of the amine prepolymer include: aliphatic polyamines such as polyethyleneimine and polyalkylene polyamine; (meth)acrylic polymers having an amino group such as aminoethylated acrylic polymer; aliphatic polyamideamines formed through reaction between polyamines and a dimer acid; and the like. Preferably, the amine prepolymer includes an aliphatic polyamine, in particular, polyethyleneimine (PEI). The amine prepolymer can be used alone, or two types or more thereof can be used in combination.

Examples of the epoxy monomer for forming the reaction product P2 include those described above with respect to the reaction product P1.

The reaction product P2 includes the constitutional unit U2 derived from the epoxy monomer, for example. The content of the constitutional unit U2 in the reaction product P2 is 20 wt% to 70 wt%, for example.

The compound group for forming the reaction product P3 includes an amine monomer and an epoxy prepolymer, as described above. The reaction product P3 is a matter (crosslinked product) obtained by the epoxy prepolymer being crosslinked by the amine monomer, for example.

Examples of the amine monomer for forming the reaction product P3 include those described above with respect to the reaction product P1.

The epoxy prepolymer includes at least one epoxy group, for example. The number of the epoxy groups included in the epoxy prepolymer is preferably two or more, may be three or more, or may be four or more. The upper limit value of the number of the epoxy groups included in the epoxy prepolymer is not limited in particular, and is 100, for example. The weight average molecular weight of the epoxy prepolymer is not limited in particular, and is 1000 to 50000, for example.

Examples of the epoxy prepolymer include an aromatic epoxy resin and a non-aromatic epoxy resin. Examples of the aromatic epoxy resin include a polyphenyl-based epoxy resin, an epoxy resin including a fluorene ring, an epoxy resin including triglycidyl isocyanurate, an epoxy resin including a hetero aromatic ring (e.g., triazine ring), and the like. Examples of the polyphenyl-based epoxy resin include bisphenol A type epoxy resin, brominated bisphenol A type epoxy resin, bisphenol F type epoxy resin, bisphenol AD type epoxy resin, stilbene type epoxy resin, biphenyl type epoxy resin, bisphenol A novolak type epoxy resin, cresol novolak type epoxy resin, diaminodiphenylmethane type epoxy resin, tetrakis(hydroxyphenyl)ethane-based epoxy resin, and the like. Examples of the non-aromatic epoxy resin include aliphatic glycidyl ether type epoxy resin, aliphatic glycidyl ester type epoxy resin, alicyclic glycidyl ether type epoxy resin, alicyclic glycidyl amine type epoxy resin, alicyclic glycidyl ester type epoxy resin, and the like. The epoxy prepolymer can be used alone, or two types or more thereof can be used in combination.

A glass transition temperature Tg of the amine compound P, in particular, of the reaction products P1 to P3, is not limited in particular, and is, for example, 40°C or less, preferably 30°C or less, more preferably 20°C or less, and further preferably 10°C or less. When the glass transition temperature Tg of the amine compound P is low to this extent, a regeneration process of the acidic gas adsorbent can be performed under a relatively mild condition, for example, with heat treatment at a low temperature. The lower limit value of the glass transition temperature Tg of the amine compound P is preferably - 100°C from the viewpoint of sufficiently ensuring the acidic gas adsorption ability in the acidic gas adsorbent. In the present description, the glass transition temperature Tg means the midpoint glass transition temperature ($T_{mg}$) obtained according to the standards of JIS K7121:1987. Normally, the reaction products P1 to P3 correspond to a thermosetting resin.

When the reaction products P1 to P3 are to be prepared, the blending ratio between the amine compound (the amine monomer or the amine prepolymer) and the epoxy compound (the epoxy monomer or the epoxy prepolymer) is preferably set such that the ratio of the equivalent of the epoxy group included in the epoxy compound relative to the equivalent of active hydrogen of the primary amino group included in the amine compound is, for example, 1 or less, preferably 0.9 or less, and more preferably 0.5 or less.

Depending on the case, the amine compound P may be a polymer P4 including a constitutional unit derived from aziridines, a polymer P5 including a constitutional unit derived from an amino group-containing (meth)acrylate, or the like. In the present description, aziridines and the amino group-containing (meth)acrylate may also be referred to as an amine monomer.

The polymer P4 includes a constitutional unit U3 derived from aziridines. The polymer P4 may include the constitutional unit U3 as a main component, or may be substantially composed of only the constitutional unit U3. In the present description, "main component" means a constitutional unit most included on a weight basis, out of all constitutional units forming the polymer.

Typically, the aziridines are ethyleneimine. A specific example of the polymer P4 is polyethyleneimine. The polymer P4 may be a linear polyethyleneimine or may be a branched polyethyleneimine.

The polymer P5 includes a constitutional unit U4 derived from an amino group-containing (meth)acrylate. The polymer P5 may include the constitutional unit U4 as a main component, or may be substantially composed of only the constitutional unit U4.

Examples of the amino group-containing (meth)acrylate include aminoalkyl(meth)acrylates such as aminoethyl(meth)acrylate, N-methylaminoethyl(meth)acrylate, and t-butylaminoethyl(meth)acrylate.

The weight average molecular weight of the amine compound P is not limited in particular, and is, for example, 500 or more, preferably 1000 or more, more preferably 10000 or more, and further preferably 100000 or more. The upper limit value of the weight average molecular weight of the amine compound P is 10000000, for example.

The ratio (the filling rate of the amine compound P in the acidic gas adsorbent) of the filling amount ($cm^3/g$) of the amine compound P (cover layer) relative to the pore volume V1 ($cm^3/g$) of the porous body is not limited in particular, and is, for example, 90% or less, may be 80% or less, may be 70% or less, or may be 60% or less. The lower limit value of the filling rate of the amine compound P is not limited in particular, and is, 10%, for example. The filling amount ($cm^3/g$) of the amine compound P corresponds to the value obtained by subtracting the pore volume V2 ($cm^3/g$) of the acidic gas adsorbent from the pore volume V1 ($cm^3/g$) of the porous body.

The content of the amine compound P in the acidic gas adsorbent is, for example, 10 wt% or more, preferably 20 wt% or more, and more preferably 30 wt% or more, may be 40 wt% or more, or may be 50 wt% or more. The higher the content of the amine compound P is, the more the acidic gas adsorption ability in the acidic gas adsorbent tends to be improved. The upper limit value of the content of the amine compound P is not limited in particular, and is, for example, 80 wt%, may be 70 wt%, or may be 60 wt%.

The acidic gas adsorbent may be substantially composed of only the porous body and the amine compound P, but may further include another component other than the amine compound P and the porous body. Examples of the other component include a reaction accelerator, a plasticizer, a filler, a pigment, a dye, an anti-aging agent, a conductive material, an antistatic agent, an ultraviolet absorber, a flame retardant, an antioxidant, and the like. The reaction accelerator is utilized when the amine compound P is synthesized, for example. Examples of the reaction accelerator include: tertiary amines such as triethylamine and tributylamine; and imidazoles such as 2-phenol-4-methylimidazole, 2-ethyl-4-methylimidazole, and 2-phenol-4,5-dihydroxyimidazole. These reaction accelerators can accelerate reaction for synthesizing a polymer of an amine monomer and an epoxy monomer, for example.

The content of the amino group, in particular, the secondary amino group, in the acidic gas adsorbent is, for example, 1 wt% or more and preferably 3 wt% or more. The higher this content is, the more the acidic gas adsorption ability in the acidic gas adsorbent tends to be improved. The upper limit value of the content of the amino group in the acidic gas adsorbent is not limited in particular, and is 10 wt%, for example.

(Method for producing acidic gas adsorbent)

Next, a method for producing the acidic gas adsorbent will be described. The production method of the present embodiment includes: mixing a porous body and a compound group including at least one selected from the group consisting of an amine monomer and an amine prepolymer, to bring the compound group into contact with surfaces of pores of the porous body; and forming, by causing the compound group to react, the amine compound P being a solid and being supported on the surfaces of the pores of the porous body.

Preferably, the compound group includes an epoxy monomer in addition to an amine monomer and an amine prepolymer. The compound group may include an epoxy prepolymer instead of the epoxy monomer, or together with the epoxy monomer.

Mixing of the porous body and the compound group can be performed according to the following method, for example. First, a dispersion liquid including the porous body is prepared. Examples of the solvent for the dispersion liquid include water, alcohol, in particular, lower alcohol, and the like. Preferably, the dispersion liquid includes lower alcohol, in particular, methanol, as the solvent. Next, the compound group is added to this dispersion liquid. Accordingly, the compound group enters the insides of the pores of the porous body, and the compound group comes into contact with the surfaces of the pores of the porous body. After the compound group is added to the dispersion liquid, the dispersion liquid may be processed in a reduced-pressure atmosphere or a vacuum atmosphere.

To the dispersion liquid, another component other than the compound group may be further added. Examples of the other component include the reaction accelerators described above, and the like.

The solid component concentration in the dispersion liquid is not limited in particular, and is, for example, 50 wt% or less, preferably 30 wt% or less, and more preferably 20 wt% or less. The lower the solid component concentration in the dispersion liquid is, the more easily the compound group can be brought into contact with the surfaces of the pores of the porous body. The lower limit value of the solid component concentration in the dispersion liquid is not limited in particular, and is 5 wt%, for example.

The method for mixing the porous body and the compound group is not limited to the method described above. For example, the porous body and the compound group may be mixed by preparing a solution including the compound group, and then immersing the porous body in the solution. Examples of the solvent included in the solution include those described above with respect to the dispersion liquid. The solution may further include another component such as a reaction accelerator, in addition to the compound group and the solvent. The solid component concentration in the solution is not limited in particular, and is, for example, 50 wt% or less, preferably 30 wt% or less, and more preferably 20 wt% or less. The lower limit value of the solid component concentration in the solution is not limited in particular, and is 5 wt%, for example.

The reaction of the compound group is typically a polymerization reaction of the amine monomer, in particular, a polymerization reaction between the amine monomer and the epoxy monomer. However, the reaction of the compound group may be a crosslinking reaction of the epoxy prepolymer by the amine monomer, or a crosslinking reaction of the amine prepolymer by the epoxy monomer. The reaction of the compound group can be performed by applying energy to the compound group. Preferably, the energy to be applied to the compound group is thermal energy. However, the energy to be applied to the compound group may be light energy.

As an example, thermal energy can be applied to the compound group by heating the above dispersion liquid. For example, the compound group can be caused to react by heating the dispersion liquid at a temperature of 40°C to 100°C. Heating of the dispersion liquid may be performed in a reduced-pressure atmosphere or a vacuum atmosphere. As an example, using a rotatory evaporator, heating of the dispersion liquid may be performed in a reduced-pressure atmosphere or a vacuum atmosphere. Through heating of the dispersion liquid, the solvent included in the dispersion liquid may be distilled off while the compound group is caused to react. After the solvent included in the dispersion liquid is distilled off, a drying process may be further performed with respect to the porous body. The condition for the drying process of the porous body is not limited in particular. As an example, the drying process of the porous body can be performed by heating the porous body at a temperature of 50°C to 100°C in a reduced-pressure atmosphere or a vacuum atmosphere.

With the production method of the present embodiment, the amine compound P being a solid can be formed by causing the reaction of the compound group to proceed. Since the reaction of the compound group proceeds in a state where the compound group is in contact with the surfaces of the pores of the porous body, the amine compound P is supported on the surfaces of the pores of the porous body.

(Adsorption amount of carbon dioxide by acidic gas adsorbent)

The acidic gas adsorbent of the present embodiment has a tendency that the adsorption ability with respect to acidic gas such as carbon dioxide is high. As an example, an adsorption amount A1 of carbon dioxide when the acidic gas adsorbent is caused to be in contact with mixed gas G composed of carbon dioxide, nitrogen, and water vapor for 15 hours is, for example, 0.1 mmol/g or more, preferably 0.3 mmol/g or more, more preferably 0.5 mmol/g or more, and further preferably 0.7 mmol/g or more, may be 0.8 mmol/g or more, may be 0.9 mmol/g or more, may be 1.0 mmol/g or more, may be 1.1 mmol/g or more, may be 1.2 mmol/g or more, or may be 1.3 mmol/g or more. The upper limit value of the adsorption amountA1 of carbon dioxide is not limited in particular, and is 10 mmol/g, for example.

Further, the acidic gas adsorbent of the present embodiment has a tendency that the adsorption speed with respect to acidic gas such as carbon dioxide is large. The adsorption speed of the acidic gas adsorbent can be evaluated by a ratio R of an adsorption amount A2 (mmol/g) of carbon dioxide when the acidic gas adsorbent is caused to be in contact with the mixed gas G for 30 minutes, relative to the above adsorption amountA1 (mmol/g). The ratio R is, for example, 40% or more, preferably 50% or more, and more preferably 60% or more, or may be 70% or more. The upper limit value of the ratio R is not limited in particular, and is 80%, for example.

The adsorption amount A2 of carbon dioxide is, for example, 0.05 mmol/g or more, preferably 0.1 mmol/g or more, more preferably 0.2 mmol/g or more, further preferably 0.3 mmol/g or more, and particularly preferably 0.4 mmol/g or more, may be 0.5 mmol/g or more, may be 0.6 mmol/g or more, or may be 0.7 mmol/g or more. The upper limit value of the adsorption amount A2 of carbon dioxide is not limited in particular, and is 5 mmol/g, for example.

[Method for measuring adsorption amount of carbon dioxide]

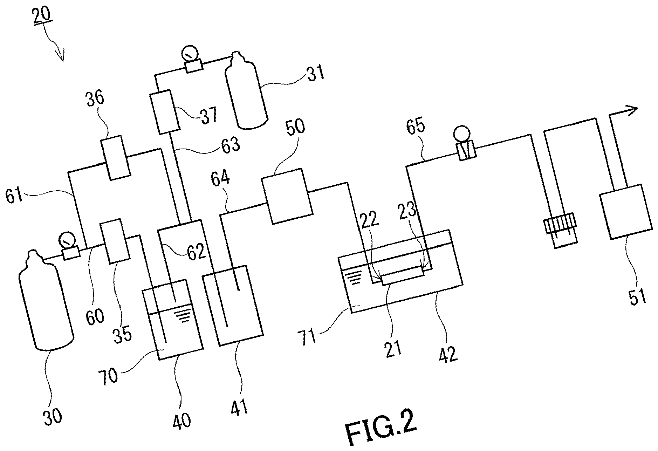

In the following, a method for measuring the adsorption amounts A1 and A2 of carbon dioxide will be described. The adsorption amounts A1 and A2 can be measured by using a measurement device 20 shown in FIG. 2, for example. The measurement device 20 includes a first tank 30 and a second tank 31. As an example, the first tank 30 stores dry-state nitrogen, and the second tank 31 stores mixed gas of dry-state nitrogen and dry-state carbon dioxide. The concentration of carbon dioxide in the mixed gas in the second tank 31 is 5 vol%, for example.

The measurement device 20 further includes a first container 40 containing water 70, and a first path 60 for sending nitrogen from the first tank 30 to the first container 40. The first path 60 has one end connected to a gas outlet of the first tank 30, and the other end disposed in the water 70 in the first container 40. Nitrogen sent from the first tank 30 to the first container 40 is humidified by coming into contact with the water 70. In the first path 60, a massflow controller 35 for adjusting the flow rate of nitrogen that is sent from the first tank 30 to the first container 40 is disposed.

The measurement device 20 further includes a second container 41, a second path 62, and a bypass path 61. The second path 62 connects the first container 40 and the second container 41 to each other. Nitrogen sent to the first container 40 and humidified is sent through the second path 62 to the second container 41. The bypass path 61 is branched from the first path 60 at a position between the first tank 30 and the massflow controller 35 and is connected to the second path 62. A part of the nitrogen sent from the first tank 30 flows into the bypass path 61 and is sent to the second container 41 through the second path 62. In the bypass path 61, a massflow controller 36 for adjusting the flow rate of nitrogen that is sent from the first tank 30 to the bypass path 61 is disposed.

The measurement device 20 further includes a third path 63 for sending the mixed gas from the second tank 31 to the second path 62. The third path 63 has one end connected to a gas outlet of the second tank 31 and the other end connected to the second path 62. In the third path 63, a massflow controller 37 for adjusting the flow rate of the mixed gas that is sent from the second tank 31 to the second path 62 is disposed. The mixed gas sent to the second path 62 is sent through the second path 62 to the second container 41.

The measurement device 20 further includes a third container 42 and a fourth path 64. The third container 42 contains water 71 and an adsorption part 21 disposed in the water 71. In the third container 42, the temperature of the water 71 is maintained at 23°C. The adsorption part 21 has a gas inlet 22 and a gas outlet 23. The adsorption part 21 functions as a container containing the acidic gas adsorbent therein. The adsorption part 21 is configured such that the water 71 does not permeate therein. Typically, the adsorption part 21 is a tube composed of a hydrophobic resin, e.g., a fluorine resin such as tetrafluoroethylene-perfluoroalkoxyethylene copolymer (PFA). As an example, the tube as the adsorption part 21 has an inner diameter of 4 mm and an outer diameter of 6 mm. The adsorption part 21 is configured to be attachable to/detachable from the measurement device 20.

The measurement device 20 can also be used as an acidic gas adsorption device including the adsorption part 21. The present invention provides, in another aspect thereof, an acidic gas adsorption device 20 including the adsorption part 21 having the gas inlet 22 and the gas outlet 23, wherein the adsorption part 21 contains the acidic gas adsorbent.

The fourth path 64 connects the second container 41 and the third container 42 to each other. Specifically, the fourth path 64 is connected to the gas inlet 22 of the adsorption part 21 in the third container 42. In the fourth path 64, a first concentration meter 50 for measuring the concentration of carbon dioxide in the gas that is supplied to the adsorption part 21 is disposed.

The measurement device 20 further includes a fifth path 65 connected to the gas outlet 23 of the adsorption part 21 and for discharging gas from the adsorption part 21 to the outside of the measurement device 20. In the fifth path 65, a second concentration meter 51 for measuring the concentration of carbon dioxide in the gas that is discharged from the adsorption part 21 is disposed. In the fifth path 65, a back pressure valve for adjusting the pressure in the adsorption part 21 to a constant value may be further disposed.

Each path of the measurement device 20 is composed of a metal-made or resin-made pipe, for example.

[Pretreatment]

In the method for measuring the adsorption amounts A1 and A2, first, a drying process is performed with respect to the acidic gas adsorbent. The drying process is performed by processing the acidic gas adsorbent for two hours or more under a condition of 60°C, in a vacuum atmosphere, for example. Next, in a dry room having a dew point of about -60°C, the adsorption part 21 is filled with the acidic gas adsorbent having been subjected to the drying process. The weight of the acidic gas adsorbent with which the adsorption part 21 is filled is 50 mg, for example. Next, the fourth path 64 and the fifth path 65 are connected to both ends of the adsorption part 21, and the adsorption part 21 is immersed in the water 71 in the third container 42.

Next, nitrogen from the first tank 30 and the mixed gas from the second tank 31 are supplied to the second container 41 through the first path 60, the second path 62, the bypass path 61, and the third path 63 of the measurement device 20. In the second container 41, these gases are mixed, and the mixed gas G composed of carbon dioxide, nitrogen, and water vapor is obtained. In the second container 41, the concentration of carbon dioxide in the mixed gas G is adjusted to 400 vol ppm. The mixed gas G has a temperature of 23°C and a humidity of 50%RH. The mixed gas G is supplied through the fourth path 64 to the adsorption part 21, at a sufficient flow rate with respect to the weight of the acidic gas adsorbent, e.g., at a flow rate of 300 mL/min with respect to 50 mg of the acidic gas adsorbent. In the adsorption part 21, the pressure of the mixed gas G is adjusted by the back pressure valve, to 107 kPa, for example.

Next, in a state where the mixed gas G is supplied to the adsorption part 21, the adsorption part 21 is taken out of the third container 42, and the adsorption part 21 is immersed in a hot water bath (not shown) at 80°C for two hours or more. Immersion of the adsorption part 21 in the hot water bath is performed until the concentration of carbon dioxide measured by the first concentration meter 50 and the concentration of carbon dioxide measured by the second concentration meter 51 have substantially the same value. Accordingly, with respect to the acidic gas adsorbent in the adsorption part 21, the pretreatment is completed.

[Adsorption test]

Next, in a state where the mixed gas G is supplied to the adsorption part 21, the adsorption part 21 is taken out of the hot water bath and is immersed in a water bath (the water 71) at 23°C of the third container 42. Accordingly, an adsorption test is started with respect to the acidic gas adsorbent in the adsorption part 21. The adsorption test is performed until 15 hours elapses from the start. When the adsorption test is performed for 15 hours, adsorption of carbon dioxide by the acidic gas adsorbent can, normally, be regarded as having reached equilibrium.

In the adsorption test, an amount of substance M1 of carbon dioxide adsorbed by the acidic gas adsorbent until 15 hours from the start, and an amount of substance M2 of carbon dioxide adsorbed by the acidic gas adsorbent until 30 minutes from the start are measured. The amount of substance of carbon dioxide adsorbed by the acidic gas adsorbent can be calculated from a result of measuring, over time, the difference between the concentration of carbon dioxide measured by the first concentration meter 50 and the concentration of carbon dioxide measured by the second concentration meter 51. On the basis of the amount of substance M1, the amount of substance of carbon dioxide adsorbed by 1 g of the acidic gas adsorbent in 15 hours is calculated, and the obtained calculated value is identified as the adsorption amount A1. Further, on the basis of the amount of substance M2, the amount of substance of carbon dioxide adsorbed by 1 g of the acidic gas adsorbent in 30 minutes is calculated, and the obtained calculated value is identified as the adsorption amount A2.

(Physical property of acidic gas adsorbent)

The pore volume V2 of the acidic gas adsorbent is, for example, 0.1 $cm^3/g$ or more and preferably 0.3 $cm^3/g$ or more, may be 0.5 $cm^3/g$ or more, or may be 0.8 $cm^3/g$ or more. The upper limit value of the pore volume V2 is not limited in particular, and is 3.0 $cm^3/g$, for example. The pore volume V2 of the acidic gas adsorbent can be identified by the following method. First, with respect to the acidic gas adsorbent, a gas adsorption method using nitrogen gas is performed. Data of an adsorption isotherm obtained by the gas adsorption method is converted by the BJH method. The pore volume V2 of the acidic gas adsorbent can be identified on the basis of the obtained pore diameter distribution.

In the acidic gas adsorbent of the present embodiment, the amine compound P is a solid. Therefore, the amine compound P is less likely to volatilize when compared with a liquid amine compound, even when the acidic gas adsorbent is disposed in a high temperature environment. Thus, in the acidic gas adsorbent, volatilization of the amine compound P is suppressed, and heat resistance of the acidic gas adsorbent is improved. When the pore volume of the porous body is large, the specific surface area of the porous body also tends to be large. Therefore, in a conventional adsorbent including a liquid amine compound, when the pore volume of the porous body is large, the surface area of the liquid amine compound increases, and the amine compound tends to volatilize more. In contrast to this, in the acidic gas adsorbent of the present embodiment, the amine compound P is a solid. Therefore, even when the pore volume of the porous body is large to an extent of 2.0 $cm^3/g$ or more, volatilization of the amine compound P can be sufficiently suppressed.

Heat resistance of the acidic gas adsorbent can be evaluated, for example, by performing a heating test with respect to the acidic gas adsorbent and using the weight maintenance rate obtained at this time. As an example, the weight maintenance rate of the acidic gas adsorbent when the acidic gas adsorbent is left for 500 hours in an environment of 85°C and 10%RH is, for example, 75% or more, or may be 77% or more, 79% or more, 80% or more, 81% or more, 82% or more, 85% or more, 87% or more, 90% or more, 95% or more, 98% or more, or further, 99% or more.

In the conventional acidic gas adsorbent, when the pore volume of the porous body is large, mechanical strength of the acidic gas adsorbent tends to be largely reduced. However, in the acidic gas adsorbent of the present embodiment, the solid amine compound P is supported on the surfaces of the pores of the porous body. Therefore, even when the pore volume V1 of the porous body has a large value, the mechanical strength tends to be high.

(Usage of acidic gas adsorbent)

The acidic gas adsorbent of the present embodiment can adsorb acidic gas. Examples of the acidic gas include carbon dioxide, hydrogen sulfide, carbonyl sulfide, sulfur oxide (SOx), hydrogen cyanide, and nitrogen oxide (NOx), and preferably, the acidic gas is carbon dioxide.

The acidic gas adsorbent can be used according to the following method, for example. First, mixed gas including acidic gas is brought into contact with the acidic gas adsorbent. The mixed gas includes another gas other than acidic gas, for example. Examples of the other gas include nonpolar gas such as hydrogen or nitrogen, and inert gas such as helium, and preferably, the other gas is nitrogen. Typically, the mixed gas is atmospheric air. The mixed gas may be off-gas from a chemical plant or thermal power generation.

The temperature of the mixed gas is room temperature (23°C), for example. The concentration of acidic gas in the mixed gas is not limited in particular, and in a standard state (0°C, 101 kPa), is, for example, 0.01 vol% (100 vol ppm) or more and preferably 0.04 vol% (400 vol ppm) or more, or may be 1.0 vol% or more. The upper limit value of the concentration of carbon dioxide in the mixed gas is not limited in particular, and in a standard state, is 10 vol%, for example. Typically, the pressure of the mixed gas is equal to that of atmospheric air in the use environment of the acidic gas adsorbent. However, the mixed gas that is brought into contact with the acidic gas adsorbent may be pressurized.

The acidic gas adsorbent having come into contact with the mixed gas adsorbs acidic gas included in the mixed gas. Operation of bringing the mixed gas into contact with the acidic gas adsorbent is performed until acidic gas adsorption by the acidic gas adsorbent reaches equilibrium, for example.

Next, a regeneration process is performed with respect to the acidic gas adsorbent having adsorbed acidic gas. The regeneration process can be performed by heating the acidic gas adsorbent, for example. The heating temperature of the acidic gas adsorbent is 50 to 80°C, for example. The acidic gas adsorbent may be heated in a reduced-pressure atmosphere or a vacuum atmosphere. Through the heating of the acidic gas adsorbent, acidic gas is desorbed from the acidic gas adsorbent. Accordingly, the acidic gas adsorbent is regenerated and the acidic gas adsorbent can be repeatedly used. The acidic gas, in particular, carbon dioxide, desorbed from the acidic gas adsorbent can be utilized as synthesis raw material for chemicals or dry ice. The adsorption operation of acidic gas by means of the acidic gas adsorbent and the regeneration process of the acidic gas adsorbent can be performed by using the measurement device 20 (acidic gas adsorption device) described above.

[Example]

In the following, the present invention will be described in further detail using Examples and Comparative Examples. However, the present invention is not limited thereto.

(Example 1)

First, as the porous body, 3.00 g of porous silica (SUNSPERA L-303 manufactured by AGC Si-Tech Co., Ltd.) was prepared, and was immersed overnight in 60 g of methanol (manufactured by FUJIFILM Wako Pure Chemical Corporation, special grade), to prepare a dispersion liquid. Next, as the amine monomer, 0.76 g of triethylenetetramine (TETA manufactured by Sigma-Aldrich Co. LLC.) was prepared, and as the epoxy monomer, 0.60 g of 1,7-octadiene diepoxide (ODE manufactured by Tokyo Chemical Industry Co., Ltd.) and 0.15 g of 1,3-bis(N,N-diglycidylaminomethyl)cyclohexane (TETRAD-C manufactured by MITSUBISHI GAS CHEMICAL COMPANY, INC.) were prepared. Next, these monomers were added to the above dispersion liquid. Accordingly, the compound group (TETA, ODE, and TETRAD-C) entered the insides of the pores of the porous body, and the compound group came into contact with the surfaces of the pores of the porous body. Next, using a rotary evaporator, the dispersion liquid was heated at a temperature of 60°C in a reduced-pressure atmosphere. Accordingly, the reaction of the compound group proceeded and the solvent included in the dispersion liquid was distilled off.

Next, the drying process of the porous body was performed by heating the porous body at a temperature of 80°C in a vacuum atmosphere. Accordingly, an acidic gas adsorbent of Example 1 including a solid amine compound was obtained. In the acidic gas adsorbent of Example 1, the solid amine compound was supported on the surfaces of the pores of the porous body.

(Examples 2 and 3)

Acidic gas adsorbents of Examples 2 and 3 were each prepared by the same method as that in Example 1, except that the ratio between the weight of the porous body and the total weight of the amine monomer and the epoxy monomer that were added to the dispersion liquid was changed such that the filling rate of the amine compound in the acidic gas adsorbent had the value shown in Table 1.

(Example 4)

An acidic gas adsorbent of Example 4 was prepared by the same method as that in Example 1, except that the porous body was changed as shown in Table 1 and that the ratio between the weight of the porous body and the total weight of the amine monomer and the epoxy monomer that were added to the dispersion liquid was changed such that the filling rate of the amine compound in the acidic gas adsorbent had the value shown in Table 1.

(Comparative Example 1)

First, as the porous body, 3.00 g of porous silica (SUNSPERA L-303 manufactured by AGC Si-Tech Co., Ltd.) was prepared, and was immersed overnight in 60 g of methanol (manufactured by FUJIFILM Wako Pure Chemical Corporation, special grade), to prepare a dispersion liquid. Next, 1.55 g of polyethyleneimine (PEI, SP-012 manufactured by NIPPON SHOKUBAI CO., LTD.) was added to the dispersion liquid. Accordingly, the insides of the pores of the porous body were filled with PEI. Next, using a rotary evaporator, the dispersion liquid was heated at a temperature of 60°C in a reduced-pressure atmosphere. Accordingly, the solvent included in the dispersion liquid was distilled off. Next, the drying process of the porous body was performed by heating the porous body at a temperature of 80°C in a vacuum atmosphere. Accordingly, an acidic gas adsorbent of Comparative Example 1 in which the insides of the pores of the porous body were filled with a liquid amine compound (PEI) was obtained.

(Comparative Examples 2 and 3)

Acidic gas adsorbents of Comparative Examples 2 and 3 were each prepared by the same method as that in Comparative Example 1, except that the ratio between the weight of the porous body and the weight of PEI was changed such that the filling rate of the amine compound (PEI) in the acidic gas adsorbent had the value shown in Table 2.

[Physical property of porous body]

With respect to the porous bodies used in Examples and Comparative Examples, the average pore diameter D, the pore volume V1, and the specific surface area were measured by the method described above. For each porous body, using a pretreatment device (VacPrep 061 manufactured by SHIMADZU CORPORATION), pretreatment was performed by performing heating at 80°C for 24 hours in a reduced-pressure atmosphere. For measurement of the average pore diameter D, the pore volume V1, and the specific surface area, an automatic specific surface area/pore distribution measurement device (TriStar II 3020 manufactured by SHIMADZU CORPORATION) was used. In the measurement of the pore volume V1, the relative pressure was set to 0.01 to 0.995. In the measurement of the specific surface area, the relative pressure was set to 0.05 to 0.3.

[Pore volume of acidic gas adsorbent]

With respect to the acidic gas adsorbents of Examples and Comparative Examples, the pore volume V2 was measured by the method described above. For each acidic gas adsorbent, pretreatment was performed by the method described above with respect to the porous body. Measurement of the pore volume V2 was performed by using the automatic specific surface area/pore distribution measurement device described above with respect to the porous body.

[Thickness of cover layer]

With respect to the acidic gas adsorbents of Examples and Comparative Examples, the thickness T of the cover layer calculated from the average pore diameter D of the porous body, the pore volume V1 of the porous body, and the pore volume V2 of the acidic gas adsorbent when each pore of the porous body was assumed to have a spherical shape was identified by the method described above.

[Adsorption amount of carbon dioxide]

With respect to the acidic gas adsorbents of Examples and Comparative Examples, the adsorption amounts A1 and A2 of carbon dioxide was measured by the method described above. In the measurement of the adsorption amounts A1 and A2, the measurement device 20 shown in FIG. 2 was used. Further, the ratio R of the adsorption amount A2 relative to the adsorption amount A1 was also calculated.

[Weight maintenance rate]

With respect to the acidic gas adsorbents of Examples and Comparative Examples, the heating test was performed according to the method described above, and the weight maintenance rate was measured.

[Table 1]

| | | Example 1 | Example 2 | Example 3 | Example 4 |
|---|---|---|---|---|---|
| Amine compound (cover layer) | Composition | TETA+ODE +TETRAD-C | TETA+ODE +TETRAD-C | TETA+ODE +TETRAD-C | TETA+ODE +TETRAD-C |
| | Nature | Solid | Solid | Solid | Solid |
| | Filling rate (%) | 58 | 78 | 84 | 70 |
| | Thickness T (nm) *1 | 4.2 | 6.7 | 7.6 | 5 |
| Porous body | Product number | L-303 | L-303 | L-303 | Q30 |
| | Average pore diameter D (nm) | 33.7 | 33.7 | 33.7 | 30 |
| | BJH pore volume V1 (cm³/g) | 2.28 | 2.28 | 2.28 | 1.28 |
| | BET specific surface area (m2/g) | 271 | 271 | 271 | 99 |
| Acidic gas adsorbent | Pore diameter (nm) (calculated value) | 25.2 | 20.3 | 18.4 | 20.0 |
| | BJH pore volume V2 (cm³/g) | 0.95 | 0.5 | 0.37 | 0.32 |

(continued)

|  |  | Example 1 | Example 2 | Example 3 | Example 4 |
|---|---|---|---|---|---|
| Adsorption performance | Adsorption amount A2 (mmol/g)*2 | 0.45 | 0.72 | 0.72 | 0.49 |
|  | Adsorption amount A1 (mmol/g)*3 | 0.72 | 1.32 | 1.35 | 0.91 |
|  | Ratio R (A2/A1) | 63 | 55 | 53 | 54 |
| Durability performance | Weight maintenance rate (%) | 82 | 81 | 81 | 85 |

(*1) Thickness T of the cover layer calculated from the average pore diameter D and the pore volumes V1 and V2 when each pore of the porous body was assumed to have a spherical shape.
(*2) Adsorption amount A2 of carbon dioxide when the acidic gas adsorbent was caused to be in contact with the mixed gas G for 30 minutes.
(*3) Adsorption amount A1 of carbon dioxide when the acidic gas adsorbent was caused to be in contact with the mixed gas G for 15 hours.

[Table 2]

|  |  | Comparative Example 1 | Comparative Example 2 | Comparative Example 3 |
|---|---|---|---|---|
| Amine compound (cover layer) | Composition | PEI | PEI | PEI |
|  | Nature | Liquid | Liquid | Liquid |
|  | Filling rate (%) | 60 | 73 | 82 |
|  | Thickness T (nm)*1 | 4.4 | 5.9 | 7.3 |
| Porous body | Product number | L-303 | L-303 | L-303 |
|  | Average pore diameter D (nm) | 33.7 | 33.7 | 33.7 |
|  | BJH pore volume V1 (cm$^3$/g) | 2.28 | 2.28 | 2.28 |
|  | BET specific surface area (m$^2$/g) | 271 | 271 | 271 |
| Acidic gas adsorbent | Pore diameter (nm) (calculated value) | 24.8 | 21.8 | 19.0 |
|  | BJH pore volume V2 (cm$^3$/g) | 0.91 | 0.62 | 0.41 |
| Adsorption performance | Adsorption amount A2 (mmol/g)*2 | 1.11 | 1.55 | 1.80 |
|  | Adsorption amount A1 (mmol/g)*3 | 2.00 | 2.70 | 3.17 |
|  | Ratio R(A2/A1) | 56 | 57 | 57 |

(continued)

|  |  | Comparative Example 1 | Comparative Example 2 | Comparative Example 3 |
|---|---|---|---|---|
| Durability performance | Weight maintenance rate (%) | 72 | 74 | 73 |

(*1) Thickness T of the cover layer calculated from the average pore diameter D and the pore volumes V1 and V2 when each pore of the porous body was assumed to have a spherical shape.

(*2) Adsorption amount A2 of carbon dioxide when the acidic gas adsorbent was caused to be in contact with the mixed gas G for 30 minutes.

(*3) Adsorption amount A1 of carbon dioxide when the acidic gas adsorbent was caused to be in contact with the mixed gas G for 15 hours.

The abbreviations in Tables 1 and 2 are as follows.

TETA: triethylenetetramine (manufactured by Sigma-Aldrich Co. LLC.)

ODE: 1,7-octadiene diepoxide (manufactured by Tokyo Chemical Industry Co., Ltd.)

TETRAD-C: 1,3-bis(N,N-diglycidylaminomethyl)cyclohexane (TETRAD-C manufactured by MITSUBISHI GAS CHEMICAL COMPANY, INC.)

PEI: polyethyleneimine (SP-012 manufactured by NIPPON SHOKUBAI CO., LTD.)

L-303: porous silica (SUNSPERA L-303 manufactured by AGC Si-Tech Co., Ltd.)

Q30: porous silica (CARiACT Q30 manufactured by FUJI SILYSIA CHEMICAL LTD.)

As seen from Tables 1 and 2, the acidic gas adsorbents of Examples in which the solid amine compound was supported on the surfaces of the pores of the porous body each had a higher weight maintenance rate and an improved heat resistance when compared with those of Comparative Examples. It is inferred that this result is due to the fact that, in the acidic gas adsorbents of Examples, volatilization of the amine compound was sufficiently suppressed. Further, in the acidic gas adsorbents of Examples, the ratio R, being the index of the adsorption speed with respect to acidic gas, is at a level substantially equal to or more than that of the acidic gas adsorbents of Comparative Examples.

INDUSTRIAL APPLICABILITY

The acidic gas adsorbent of the present embodiment can adsorb carbon dioxide in atmospheric air, for example.

**Claims**

1. An acidic gas adsorbent comprising:

    a porous body; and
    an amine compound being a solid and being supported on surfaces of pores of the porous body.

2. The acidic gas adsorbent according to claim 1, wherein
    the porous body has a pore volume of 2.0 cm$^3$/g or more.

3. The acidic gas adsorbent according to claim 1 or 2, comprising

    a cover layer covering the surfaces, wherein
    the cover layer includes the amine compound.

4. The acidic gas adsorbent according to claim 3, wherein
    when each pore of the porous body is assumed to have a spherical shape, the cover layer has a thickness of 5.0 nm or less, the thickness being calculated from an average pore diameter of the porous body, a pore volume of the porous body, and a pore volume of the acidic gas adsorbent.

5. The acidic gas adsorbent according to any one of claims 1 to 4, wherein

the porous body has a shape of being particulate.

6. The acidic gas adsorbent according to any one of claims 1 to 5, wherein
the porous body includes silica.

7. The acidic gas adsorbent according to any one of claims 1 to 6, wherein
the amine compound includes an amine polymer including a constitutional unit derived from an epoxy monomer.

8. The acidic gas adsorbent according to any one of claims 1 to 7, wherein

an adsorption amount A1 of carbon dioxide when the acidic gas adsorbent is caused to be in contact with mixed gas composed of carbon dioxide, nitrogen, and water vapor for 15 hours is 0.1 mmol/g or more, where the carbon dioxide in the mixed gas has a concentration of 400 vol ppm and the mixed gas has a temperature of 23°C and a humidity of 50%RH.

9. The acidic gas adsorbent according to any one of claims 1 to 8, wherein

a ratio of an adsorption amount A2 (mmol/g) of carbon dioxide when the acidic gas adsorbent is caused to be in contact with mixed gas composed of carbon dioxide, nitrogen, and water vapor for 30 minutes, relative to an adsorption amount A1 (mmol/g) of carbon dioxide when the acidic gas adsorbent is caused to be in contact with the mixed gas for 15 hours is 50% or more, where the carbon dioxide in the mixed gas has a concentration of 400 vol ppm and the mixed gas has a temperature of 23°C and a humidity of 50%RH.

10. The acidic gas adsorbent according to any one of claims 1 to 9, wherein
the porous body has an average pore diameter of 5 to 50 nm.

11. The acidic gas adsorbent according to any one of claims 1 to 10, wherein
the porous body has a specific surface area of 50 to 800 $m^2$/g.

12. A method for producing an acidic gas adsorbent, the method comprising:

mixing a porous body and a compound group including at least one selected from the group consisting of an amine monomer and an amine prepolymer, to bring the compound group into contact with surfaces of pores of the porous body; and
forming, by causing the compound group to react, an amine compound being a solid and being supported on the surfaces of the pores of the porous body.

13. An acidic gas adsorption device comprising

an adsorption part having a gas inlet and a gas outlet, wherein
the adsorption part contains the acidic gas adsorbent according to any one of claims 1 to 11.

FIG.1

FIG.2

# INTERNATIONAL SEARCH REPORT

| | International application No. |
|---|---|
| | **PCT/JP2022/013294** |

**A. CLASSIFICATION OF SUBJECT MATTER**

***B01J 20/26***(2006.01)i; ***B01D 53/14***(2006.01)i; ***B01J 20/28***(2006.01)i; ***B01J 20/30***(2006.01)i; ***C01B 33/18***(2006.01)i
FI: B01J20/26 A; B01J20/28 Z; B01J20/30; B01D53/14 100; C01B33/18 C

According to International Patent Classification (IPC) or to both national classification and IPC

**B. FIELDS SEARCHED**

Minimum documentation searched (classification system followed by classification symbols)
B01J20/26; B01D53/14; B01J20/28; B01J20/30; C01B33/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-509280 A (UNIVERSITY OF SOUTHERN CALIFORNIA) 05 April 2018 (2018-04-05) <br> claims, paragraphs [0028]-[0031], [0043]-[0059], [0063]-[0068], examples | 1-13 |
| X | JP 2011-502749 A (CORNING INCORPORATED) 27 January 2011 (2011-01-27) <br> claims, paragraphs [0023], [0043], [0055], examples | 1-3, 6-13 |
| X | KR 10-2017-0053041 A (KOREA ADVANCED INST SCI & TECH) 15 May 2017 (2017-05-15) <br> claims, paragraphs [0012], [0029], [0031]-[0064], examples | 1-13 |
| X | JP 2017-507011 A (UNIVERSITY OF SOUTHERN CALIFORNIA) 16 March 2017 (2017-03-16) <br> claims, paragraphs [0013]-[0021], [0026]-[0046], [0053], examples | 1-6, 8-13 |
| A | JP 2017-047412 A (HITACHI CHEMICAL CO LTD) 09 March 2017 (2017-03-09) | 1-13 |
| A | US 2012/0160097 A1 (EXXONMOBIL RESEARCH AND ENGINEERING COMPANY) 28 June 2012 (2012-06-28) | 1-13 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 May 2022** | **31 May 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2022/013294** |

| Patent document cited in search report | | | Publication date (day/month/year) | Patent family member(s) | Publication date (day/month/year) |
| --- | --- | --- | --- | --- | --- |
| JP | 2018-509280 | A | 05 April 2018 | US 2016/0199810 A1 paragraphs [0029]-[0032], [0047]-[0070], [0074]-[0079], examples, claims US 2019/0168185 A1 US 2021/0197172 A1 WO 2016/114991 A1 EP 3244993 A1 CA 2973572 A1 KR 10-2017-0127416 A | |
| JP | 2011-502749 | A | 27 January 2011 | US 2009/0110873 A1 examples, paragraphs [0044], [0064], [0069], claims WO 2009/058205 A1 EP 2214805 A | |
| KR | 10-2017-0053041 | A | 15 May 2017 | WO 2017/078219 A1 | |
| JP | 2017-507011 | A | 16 March 2017 | US 2017/0304764 A1 paragraphs [0013]-[0021], [0027]-[0045], [0052], examples, claims WO 2015/084521 A1 EP 3077103 A1 CA 2931941 A1 KR 10-2016-0085355 A CN 106660010 A | |
| JP | 2017-047412 | A | 09 March 2017 | JP 2017-47410 A | |
| US | 2012/0160097 | A1 | 28 June 2012 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015009185 A

**Non-patent literature cited in the description**

- **HANG ZHANG et al.** CO2 capture on easily regenerable hybrid adsorbents based on polyamines and mesocellular silica foam. Effect of pore volume of the support and polyamine molecular weight. *RSC Adv.,* 2014, vol. 4, 19403-19417